# FASCICULE DE BREVET EUROPEEN

(11) **EP 1 407 909 B1**
(45) Date de publication et mention de la délivrance du brevet: **06.06.2012**
(21) Numéro de dépôt: 03364023.6
(22) Date de dépôt: 10.10.2003
(51) Int. Cl.: B60J 5/06, E05D 15/10

(54) **Dispositif d'obturation d'une baie ménagée dans la carrosserie d'une véhicule automobile, à panneau mobile et pivotant.**
Schliesseinrichtung für eine in einer Kraftfahrzeugkarrosserie angeordnete Öffnung mit einem beweglichen und verschwenkbaren Deckel
Closing device for an opening arranged in a motor vehicle body, with a movable and tiltable panel

(30) Priorité: 11.10.2002 FR 0212763; 15.11.2002 FR 0214360
(43) Date de publication de la demande: 14.04.2004
(73) Titulaire: Advanced Comfort Systems France SAS - ACS France, 79300 Bressuire (FR)
(72) Inventeur: Leduque, Cédric, 79140 Cerizay (FR)
(74) Mandataire: Vidon, Patrice

(56) Documents cités:
- EP-A- 0 401 081
- DE-B- 1 236 970
- DE-B- 1 280 710

## Description

Le domaine de l'invention est celui des baies de véhicules automobiles. Plus précisément, l'invention concerne les dispositifs d'obturation d'une baie ménagée dans la carrosserie d'un véhicule, et comprenant une partie mobile coulissante, susceptible de libérer ou de fermer une ouverture.

Classiquement, pour obturer la baie d'un véhicule, qu'il s'agisse d'une automobile, d'un véhicule utilitaire, d'un camion, d'un autobus ou d'un wagon de chemin de fer, on rapporte une vitre, maintenue par un cadre de liaison. Ce dernier présente une partie interne et une partie externe, qui viennent pincer simultanément les bords de la glace et de l'ouverture ménagée dans la carrosserie, avec une garniture d'étanchéité.

La technique la plus couramment répandue pour l'ouverture et la fermeture des vitres des portières d'automobile est de rendre celle-ci mobile verticalement dans son propre plan, en la faisant pénétrer ou sortir du caisson ou de la garniture de ces portières latérales. Le déplacement peut être actionné manuellement ou de façon motorisée.

Cette technique présente cependant de nombreux inconvénients. Les moyens d'actionnement et d'entraînement sont lourds, encombrants et complexes à monter et à régler. Les portes qui en résultent présentent en conséquence un volume important, nuisant notamment au volume disponible à l'intérieur du véhicule (largeur aux coudes notamment).

Elles ont de plus un coût de fabrication élevé et posent classiquement des problèmes d'étanchéité. Le réglage et la maintenance sont également complexes. Elles imposent en outre des contraintes sur le plan de l'esthétique et de l'ergonomie.

Une autre technique a été proposée par le titulaire de la présente demande de brevet. Cette technique est notamment décrite dans les documents de brevet EP - 0 778 168 et EP - 0 857 844. Le dispositif d'obturation (appelé par la suite "baie flush") présenté notamment dans ces documents comprend un ensemble fixe et une partie mobile par rapport à cet ensemble fixe. La partie mobile est reliée à l'ensemble fixe par des éléments fonctionnels qui assurent la mobilité requise et qui sont rapportés sur la face de la partie fixe tournée vers l'intérieur du véhicule.

Une telle baie flush peut être montée intégralement indépendamment du véhicule, et rapportée, depuis l'extérieur, dans le logement défini à cet effet sur la carrosserie du véhicule. Elle peut également être solidarisée, en particulier par collage à la partie inférieure d'une portière, selon la technique décrite dans le document de brevet EP 1 022 172. On résout ainsi la plupart des problèmes identifiés plus haut.

Sur le plan esthétique, la baie flush présente, vue de l'extérieur, un aspect lisse, affleurant, du fait qu'aucun cadre n'est nécessaire.

Le mouvement de la partie mobile peut être, par exemple, basculant ou coulissant. On décrit ci-après, rapidement, un exemple de ce dernier cas.

Pour assurer un coulissement de la partie mobile, constitué généralement par un panneau transparent, les moyens fonctionnels comprennent un premier et un second rails de guidage montés sur l'ensemble fixe du dispositif, de part et d'autre de l'ouverture fermée par le panneau mobile. Celui-ci est monté sur des éléments coulissants dans les rails, pour coulisser selon une direction longitudinale, dans un plan de coulissement parallèle à l'ensemble fixe.

Des moyens d'articulation assurant la liaison du panneau avec les rails de guidage permettent par ailleurs un déplacement transversal du panneau entre une position intermédiaire de dégagement dans laquelle il est en regard de la baie (dans le plan de coulissement), et une position d'obturation dans laquelle il est enchâssé dans la baie. Le panneau mobile passe ainsi du plan formé par l'ensemble fixe (position d'obturation) à un plan sensiblement parallèle de coulissement, et réciproquement.

Selon le mode de réalisation décrit dans le document de brevet déjà cité EP-0 EP - 0 857 844, rappelé à l'aide des figures 1 et 2, le dispositif d'obturation d'une baie comprend un panneau 11 coulissant, mobile le long de rails de guidage 12a, 12b, entre des positions d'obturation et d'ouverture d'une ouverture 13 ménagée dans un élément fixe 14 destiné à être rapporté sur la carrosserie d'un véhicule, pour obturer une baie ménagée sur celle-ci.

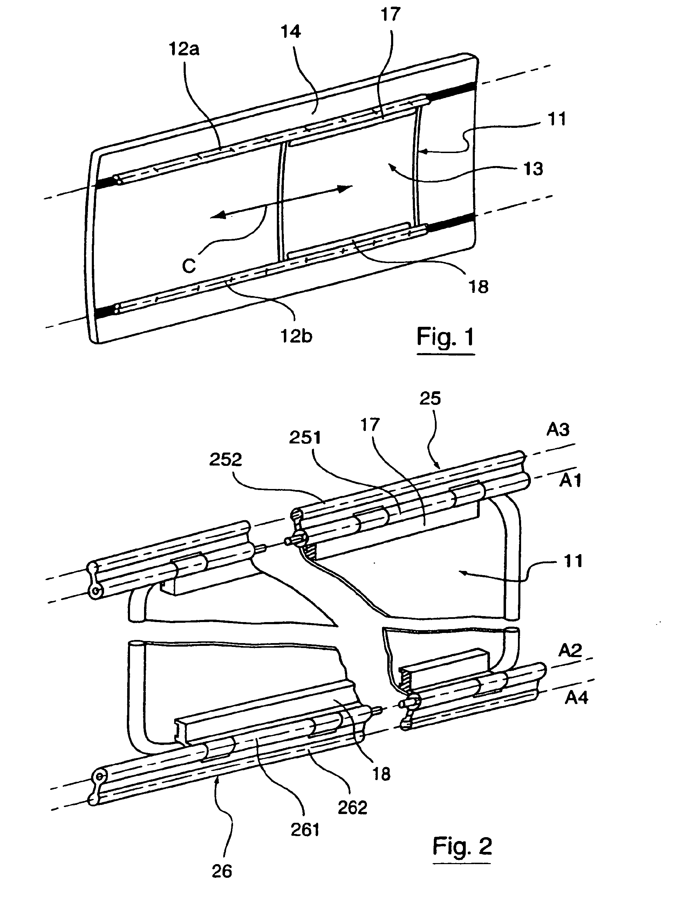

Comme illustré par la figure 2, le panneau 11 est relié aux rails de guidage par l'intermédiaire d'organes d'articulation 25 et 26.

Ces organes d'articulation 25 et 26 permettent d'assurer le déplacement du panneau 11 d'une position où il est engagé dans la baie (position d'obturation) vers une position intermédiaire de dégagement (position d'ouverture) où il est en regard de la baie et légèrement en retrait de celle-ci, et inversement.

En agissant sur un des organes d'articulation 25, 26 au niveau de l'articulation (de façon à ouvrir l'angle formé par chacun des éléments), on déplace la partie mobile 11 perpendiculairement au plan défini par l'ensemble fixe 14. On réalise ainsi l'enchâssement de la partie mobile dans la partie fixe, et donc l'obturation de l'ouverture.

Le retour en position d'ouverture se fait généralement sous le seul effet du poids, lorsque les moyens de verrouillage sont déverrouillés.

On met donc en oeuvre une cinématique dudit panneau mobile par rapport audit ensemble fixe, décomposée en deux déplacements :
- un déplacement de verrouillage/déverrouillage, sensiblement perpendiculaire au plan formé par l'ensemble fixe 14, et permettant le passage du plan formé par l'ensemble fixe 14 à un plan de coulissement, sensiblement parallèle au plan formé par l'ensemble fixe 14, et réciproquement ;
- un déplacement de coulissement dans le plan de coulissement.

Une telle baie est relativement complexe, et suppose un décalage du panneau mobile dans le sens vertical qui n'est pas toujours acceptable.

On peut citer les solutions des documents DE-B-1280710 (divulguant toutes les caractéristiques du préambule de la revendication 1) et DE-B-1236970 qui mettent en oeuvre des biellettes.

D'autres techniques ont également été proposées pour effectuer ces mouvements perpendiculaires, de façon manuelle ou motorisée.

Cette décomposition en deux mouvements perpendiculaires est en effet avantageuse en terme d'étanchéité : le panneau mobile s'enchâsse directement dans l'ouverture, sans qu'il soit nécessaire de prévoir de jeu important, comme cela est le cas avec une autre technique connue, selon laquelle le panneau mobile effectue un mouvement louvoyant.

Cette technique plus ancienne repose sur la mise en oeuvre de rails de guidage, dans lesquels circulent au moins deux éléments de guidage du panneau mobile. Lors de la fermeture, le premier élément de guidage s'engage dans la partie de transition, le panneau mobile prenant alors une position "en travers", par rapport au plan du panneau fixe, puis continue son déplacement.

A la fin du mouvement, le second élément de guidage atteint à son tour la partie de transition, de façon que le panneau mobile revienne complètement dans le plan du panneau fixe.

Cette technique est relativement simple, mais nécessite de prévoir un jeu important, pour permettre le passage du panneau mobile le long du panneau fixe, lors de la fin du mouvement, pendant laquelle l'extrémité verticale du panneau mobile coulisse et se redresse, suivant la partie de transition.

Un tel jeu est problématique pour des raisons évidentes d'étanchéité, mais également de sécurité (lutte contre les effractions) et d'esthétique.

L'invention a notamment pour objectif de pallier les inconvénients de l' art antérieur.

Plus précisément, l'invention a pour objectif de proposer un dispositif d'obturation d'une baie intégrant un panneau mobile coulissant dont le mécanisme d'ouverture/fermeture est simple à fabriquer et aisé à monter et à régler.

Un autre objectif de l'invention est de fournir un tel dispositif d'obturation qui limite les jeux nécessaires entre un panneau fixe et un panneau mobile, et donc notamment qui garantit une bonne étanchéité sans moyens complexes.

L'invention a encore pour objectif de fournir un tel dispositif d'obturation d'une baie qui soit simple à monter sur une portière ou sur un véhicule, et qui permette une utilisation aisée et fiable.

Un autre objectif de l'invention est de fournir un tel dispositif d'obturation d'une baie qui conserve les avantages des « baies flush » déjà développées par le Titulaire de la présente demande, et notamment :
- aspect esthétique affleurant ;
- aspects aérodynamiques.

Ces objectifs ainsi que d'autres qui apparaîtront par la suite, sont atteints grâce à l'invention qui a pour objet un dispositif d'obturation d'une baie d'un véhicule automobile, comprenant un ensemble fixe destiné à être solidarisé à la carrosserie dudit véhicule et au moins un panneau mobile, ledit panneau mobile pouvant coulisser par rapport audit ensemble fixe à l'aide de moyens de support et/ou de guidage montés sur ledit ensemble fixe, et venir obturer ou libérer une ouverture ménagée dans ledit ensemble fixe, ledit panneau mobile comprenant des moyens pour pivoter par rapport à un axe de pivotement s'étendant perpendiculairement à l'axe de coulissement dudit panneau et au-delà desdits moyens de support et/ou de guidage, entre une position d'obturation, dans laquelle il se trouve dans le plan défini par ledit ensemble fixe, et une position de libération, dans laquelle il forme un angle non nul avec ledit ensemble fixe, caractérisé en ce que lesdits moyens de pivotement comprennent au moins une extension prévue pour coopérer avec au moins une ligne d'appui solidaire dudit ensemble fixe, de façon que lorsque ladite extension est en contact avec ladite ligne d'appui :
- un premier bord dudit panneau mobile, proche de ladite extension, se trouve sensiblement dans le plan défini par ledit ensemble fixe ; et que
- ledit panneau mobile peut pivoter autour de ladite ligne d'appui, pour passer dans ladite position d'obturation à ladite position de libération.

On obtient ainsi un panneau louvoyant et coulissant, dont la cinématique de déplacement est obtenue à l'aide d'un ensemble mécanique de conception simple par rapport aux solutions de l'art antérieur.

Comme cela va être expliqué par la suite, les pièces mécaniques mises en oeuvre dans le dispositif d'obturation selon l'invention, peuvent être fabriquées et montées aisément et à moindre coût, et assurent un fonctionnement fiable et durable.

En effet, la liaison pivot permettant le louvoiement du panneau mobile nécessite aucune charnière, biellettes ou autres articulations spécifiques, susceptibles de générer un quelconque dysfonctionnement dû notamment à une usure prématurée, un encrassement ou autres phénomènes de grippage.

En outre, il n'est pas nécessaire de prévoir de jeux entre le panneau mobile et l'ensemble fixe ; l'étanchéité du dispositif peut, par conséquent, être obtenue sans moyens complexes comme cela va apparaître plus clairement par la suite.

On comprend donc que la liaison pivot entre le panneau mobile et l'ensemble fixe est obtenue simplement en mettant en appui la surface plane présentée par la patte de louvoiement sur une surface non plane dont au moins une génératrice forme un axe de pivotement.

Comme déjà mentionné précédemment, un tel agencement s'avère donc particulièrement avantageux en termes de fabrication, de montage et de maintenance (aucun entretien spécifique n'étant a priori nécessaire).

Dans ce cas, ledit logement forme avantageusement une cavité parallélépipédique dont une arête constitue ladite ligne d'appui.

Préférentiellement, ladite extension montée au voisinage d'un bord dudit panneau mobile comprend au moins une patte, dite patte pivotante, faisant saillie dudit panneau mobile.

Avantageusement, lesdites pattes pivotantes sont légèrement décalées vers l'intérieur du véhicule par rapport au plan dudit panneau mobile.

Selon une solution avantageuse, ledit panneau mobile porte au moins une patte de louvoiement destinée à coopérer avec ledit ou lesdits éléments de support et/ou de guidage pour permettre le passage de ladite position de libération à une position de coulissement dans laquelle ladite partie mobile peut se déplacer parallèlement audit ensemble fixe.

Préférentiellement, lesdits moyens de support et/ou de guidage comprennent au moins un rail et en ce que ledit panneau mobile porte au moins un élément susceptible de coulisser dans ledit rail.

Il est toutefois envisageable que les moyens de guidage soient constitués par deux rails de guidage distincts, assurant chacun le guidage d'une extrémité du panneau mobile.

Dans ce cas, ledit ou lesdits rails présentent avantageusement au moins une portion formant rampe de louvoiement et assurant le guidage de ladite ou desdites pattes de louvoiement.

Préférentiellement, ledit panneau mobile porte, au voisinage de son bord opposé à celui portant ladite extension, au moins une patte de coulissement susceptible d'être guidée par lesdits moyens de guidage et/ou de support pendant le déplacement de coulissement.

Selon une autre caractéristique, lesdits moyens de guidage et/ou de support présentent avantageusement une ouverture permettant le passage de ladite patte de coulissement, lors du pivotement dudit panneau mobile.

Préférentiellement, lesdits moyens de guidage et/ou de support comprennent un rail unique dans lequel peuvent coulisser ladite patte de louvoiement et ladite patte de coulissement.

Dans ce cas, ledit rail se termine avantageusement par une partie formant un angle non nul avec le plan défini par ledit ensemble fixe, dans laquelle ne circule que ladite patte de louvoiement.

Avantageusement, lesdites pattes pivotantes sont légèrement décalées vers l'intérieur du véhicule par rapport au plan dudit panneau mobile.

Selon encore une autre caractéristique, le dispositif comprend un support unique desdites pattes pivotantes, de louvoiement et de coulissement, ledit support étant solidaire dudit panneau mobile.

Bien entendu, d'autres modes de réalisation sont envisageables sans sortir du cadre de l'invention, par exemple en prévoyant de fabriquer chacune des pattes indépendamment en vue de les rapporter individuellement sur le panneau mobile.

Toutefois, un tel support unique permet de regrouper les pièces nécessaires aux déplacements du panneau mobile et solidaires de celui-ci, ce qui s'avère particulièrement avantageux en termes de logistique de fabrication et de gamme de montage.

Dans ce cas, ledit support porte préférentiellement des pattes pivotantes, de louvoiement et de coulissement au voisinage de chacun des bords parallèles à la direction du coulissement dudit panneau mobile, ledit support présente avantageusement une forme en C.

Selon une solution préférée, le dispositif comprend des moyens de verrouillage/déverrouillage dudit panneau mobile dans ladite position d'obturation.

Dans ce cas, lesdits moyens de verrouillage/déverrouillage comprennent avantageusement au moins un verrou susceptible de coopérer avec ledit support ; ledit support présentant préférentiellement, au voisinage de son bord portant ladite ou lesdites pattes pivotantes, au moins un évidement formant logement, en position d'obturation dudit panneau mobile, pour ledit verrou.

Avantageusement, ledit ou lesdits verrous sont montés coulissant le long d'une tringle solidaire dudit ensemble fixe et sensiblement perpendiculaire audit ou auxdits rails.

Préférentiellement, ledit ensemble fixe est un panneau vitré.

L'invention concerne également une portière équipée d'un dispositif d'obturation tel que décrit précédemment.

L'invention concerne aussi un véhicule présentant au moins une porte telle que décrite précédemment.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
- les figures 1 et 2 sont des vues d'un exemple de baie flush à panneaux coulissants selon l'art antérieur ;
- la figure 2 est une vue éclatée d'un dispositif d'obturation selon l' invention ;
- les figures 4a, 4b et 4c sont des vues de détails d'un support de pattes pivotantes, de louvoiement et de coulissement, équipant un dispositif d'obturation selon l'invention ;
- les figures 5 à 9 sont des vues de phases successives d'ouverture d'un dispositif d'obturation selon l'invention.

Comme déjà indiqué, le principe général de l'invention repose sur le fait que la liaison mécanique entre le panneau mobile et l'élément fixe, permettant le louvoiement du panneau, est réalisée en prévoyant une liaison pivot.

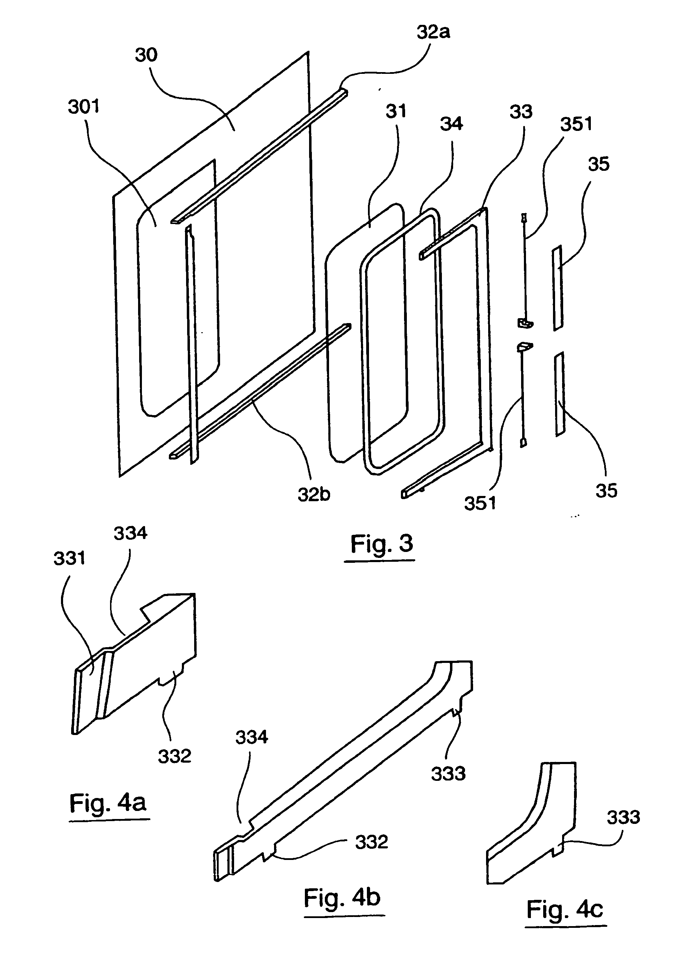

En référence à la figure 3, un dispositif d'obturation d'une baie ménagée dans la carrosserie d'un véhicule automobile comprend un ensemble fixe 30 (en l'occurrence un panneau vitré) destiné à être rapporté sur la carrosserie et un panneau mobile 31 pouvant venir obturer ou libérer l'ouverture 301 ménagée dans l'ensemble fixe 30.

Selon l'invention, une liaison pivot (explicitée plus en détail par la suite) permet une cinématique du panneau mobile 31 par rapport à l'ensemble fixe 30 décomposée en trois déplacements :
- un déplacement d' ouverture/fermeture selon lequel le panneau mobile 31 pivote par rapport à l'ensemble fixe 30, passant d'une position d'obturation dans laquelle il affleure avec l'ensemble fixe 30, à une position intermédiaire dans laquelle le panneau mobile 31 occupe une position « en travers » par rapport à l'ensemble fixe 30 ;
- un déplacement intermédiaire au cours duquel le panneau mobile 31 passe de la position intermédiaire mentionnée précédemment à une position d'ouverture dans laquelle il se trouve dans un plan parallèle à celui de l'élément fixe, et légèrement en retrait de celui-ci ;
- un déplacement de coulissement, au cours duquel le panneau mobile 31 coulisse dans son plan d'ouverture en étant guidé, tel qu'illustré par la figure 1, par les rails 32a et 32b.

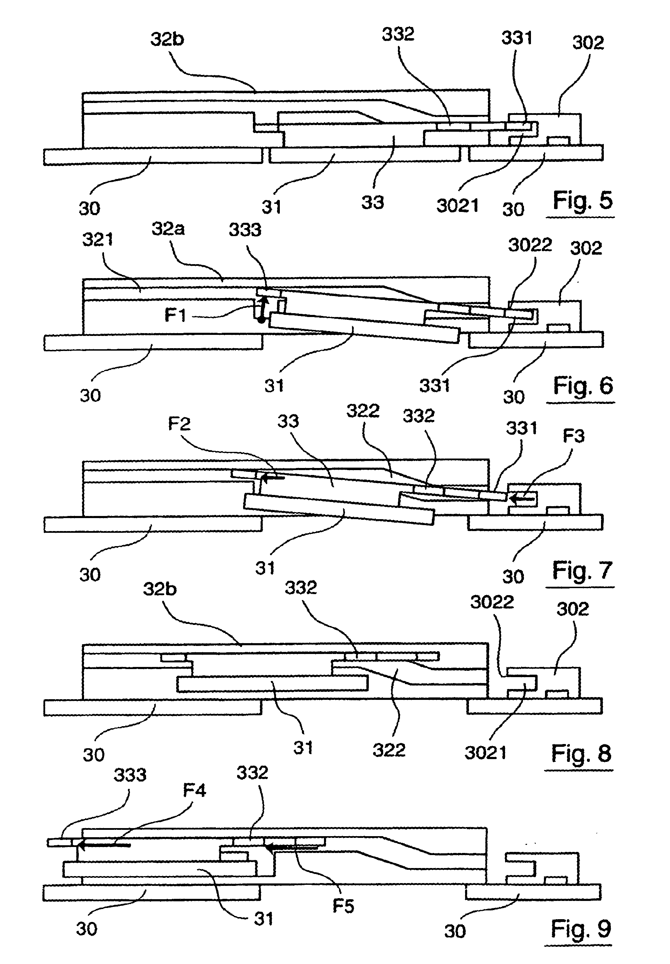

Selon le présent mode de réalisation, la liaison pivot entre le panneau mobile 31 et l'ensemble fixe 30 est obtenue à l'aide d'un élément 302 (figure 8) rapportée et fixée sur l'ensemble fixe 30, cet élément 302 présentant un logement défini par une cavité parallélépipédique 3021.

En position d'obturation du panneau mobile 31 (tel qu'illustré par la figure 5), cette cavité 3021 reçoit une patte pivotante 331 portée par le cadre 33 solidaire du panneau mobile 31.

L'élément 302 présente une arête 3022 (figure 8) formant une ligne contre laquelle la patte pivotante 331 est susceptible de venir simplement en appui, la patte pivotante 331 pouvant par conséquent pivoter et se déplacer en translation (par glissement) librement par rapport à la ligne d'appui définie par l'arête 3022.

On comprend qu'un tel agencement permet de surmonter une difficulté qui consisterait à faire pivoter le panneau autour de son bord. Dans ce cas en effet, il serait nécessaire de prévoir un axe spécifique, dont il faudrait guider le déplacement en prolongeant le rail correspondant. Or, un tel prolongement n'est clairement pas souhaitable pour des raisons évidentes d'encombrement.

L'invention contourne donc astucieusement cette difficulté en déportant l'axe de pivotement par rapport à l'extrémité du panneau, et en rapportant un élément dont l'arête 3022 forme l'axe autour duquel le panneau peut pivoter.

Comme indiqué précédemment, la patte pivotante 331 est portée par un cadre 33 présentant la forme générale d'un C (comme cela apparaît clairement sur la figure 3), dont les contours épousent sensiblement ceux du panneau mobile 31.

On note qu'il est prévu de rapporter sur ce cadre 33 un joint 34 destiné à assurer l'étanchéité du dispositif lorsque celui-ci est en position d'obturation.

En outre, en référence aux figures 4a, 4b et 4c, le cadre 33 porte également, sur sa barre inférieure, une patte de louvoiement 332, du côté de son extrémité portant la patte pivotante 331, le cadre 33 portant, à l'autre extrémité de sa barre inférieure, une patte de coulissement 333.

De façon à assurer un guidage satisfaisant des déplacements du panneau mobile 31, le cadre 33 porte, en des positions similaires à celles qui viennent d'être mentionnées pour sa barre inférieure, des pattes pivotante, de louvoiement et de coulissement également sur sa barre supérieure.

On note que les pattes pivotantes (331) sont légèrement décalées vers l'intérieur du véhicule par rapport au plan dudit panneau mobile (31), pour faciliter le déplacement de pivotement.

Par ailleurs, selon le présent mode de réalisation, le dispositif d'obturation selon l'invention présente des moyens de verrouillage/déverrouillage comprenant deux verrous 35 susceptibles de coulisser chacun le long d'une tringle 351 montée sur l'ensemble fixe 30 ou sur un élément solidaire de celui-ci.

En position de verrouillage, ces verrous 35 viennent se loger dans un évidement 334 (figure 4a et 4b) prévu à cet effet sur les barres inférieure et supérieure du cadre 33.

La cinématique d'ouverture du panneau mobile 31 va maintenant être explicitée plus en détail à l'aide des figures 5 à 9, qui sont des vues en coupe de dessus du dispositif selon l'invention (dans la description qui va suivre, il va être fait référence aux différentes pièces mécaniques apparaissant dans la partie inférieure du dispositif, le fonctionnement des pièces de la partie supérieure du dispositif s'opérant de façon identique et simultanée).

Sur la figure 5, on a représenté un dispositif d'obturation selon l'invention selon une configuration dans laquelle le panneau mobile 31 obture l'ouverture ménagée dans l'ensemble fixe30.

Dans cette position, la patte pivotante 331 du cadre 33 est logée dans la cavité 3021 de l'élément 302, le panneau mobile 31 s'inscrivant dans le plan de l'ensemble fixe 30 en affleurant avec celui-ci.

Tel que cela apparaît sur la figure 6, l'ouverture du dispositif est initialisée (les verrous 35 étant en position déverrouillée) en opérant une poussée sur le panneau mobile de façon à le diriger, par un mouvement de rotation, vers l'intérieur du véhicule, ce mouvement de rotation correspondant au pivotement de la patte pivotante 331 autour de la ligne d'appui formée par l'arête 3022 de l'élément 302.

Ce mouvement de pivotement du panneau mobile 31 a pour conséquence d'engager la patte de coulissement 333 dans la rainure 321 du rail 32b, tel qu'indiqué par la flèche F1, le panneau mobile occupant alors une position intermédiaire entre sa position d'obturation et sa position d'ouverture.

Le panneau mobile 31 est ensuite déplacé tel qu'indiqué par les flèches F2 et F3, la patte pivotante 331 glissant, pendant son déplacement, sur l'arête 3022 de l'élément 302.

Au fur et à mesure du déplacement dit intermédiaire indiqué par les flèches F2, F3, la patte de louvoiement 332 du cadre 33 est guidée par la rampe de louvoiement 322 prévue à cet effet dans le rail 32b, le panneau 31 passe de la position intermédiaire illustrée par la figure 6 à la position dite d'ouverture illustrée par la figure 7.

Le panneau peut ensuite être déplacé, tel qu'illustré par les flèches F4 et F5 de la figure 9, vers une position d'ouverture complète, le coulissement du panneau 31 étant guidé par l'intermédiaire des pattes de coulissement 333 et de louvoiement 332 à l'intérieur de la rainure 321 du rail 32b.

On comprend que la cinématique de fermeture du panneau mobile 31 s'effectue de façon similaire, selon un ordre inverse.

Un tel dispositif d'obturation peut être monté intégralement indépendamment du véhicule, et rapporté depuis l'extérieur, dans le logement défini à cet effet sur la carrosserie, et en particulier sur une porte, du véhicule.

## Revendications

1. Dispositif d'obturation d'une baie d'un véhicule automobile, comprenant un ensemble fixe (30) destiné à être solidarisé à la carrosserie dudit véhicule et au moins un panneau mobile (31),
ledit panneau mobile (31) pouvant coulisser par rapport audit ensemble fixe (30) à l'aide de moyens de support et/ou de guidage (32a, 32b) montés sur ledit ensemble fixe (30), et venir obturer ou libérer une ouverture (301) ménagée dans ledit ensemble fixe (30),
ledit panneau mobile (31) comprenant des moyens pour pivoter par rapport à un axe de pivotement s'étendant perpendiculairement à l'axe de coulissement dudit panneau et au-delà desdits moyens de support et/ou de guidage, entre une position d'obturation, dans laquelle il se trouve dans le plan défini par ledit ensemble fixe (30), et une position de libération, dans laquelle il forme un angle non nul avec ledit ensemble fixe (30),
**caractérisé en ce que** lesdits moyens de pivotement comprennent au moins une extension (331) prévue pour coopérer avec au moins une ligne d'appui solidaire dudit ensemble fixe (30), de façon que lorsque ladite extension (331) est en contact avec ladite ligne d'appui :
- un premier bord dudit panneau mobile (31), proche de ladite extension, se trouve sensiblement dans le plan défini par ledit ensemble fixe (30) ; et que
- ledit panneau mobile (31) peut pivoter autour de ladite ligne d'appui, pour passer de ladite position d'obturation à ladite position de libération.

2. Dispositif d'obturation selon la revendication 1, **caractérisé en ce que** ledit ensemble fixe (30) présente un logement dans lequel peut pénétrer ladite extension (331).

3. Dispositif d'obturation selon la revendication 2, **caractérisé en ce que** ledit logement forme une cavité parallélépipédique (3021) dont une arête (3022) constitue ladite ligne d'appui.

4. Dispositif selon l'une quelconque des revendications 1 à 3, **caractérisé en ce que** ladite extension (331) montée au voisinage d'un bord dudit panneau mobile (31) comprend au moins une patte, dite patte pivotante, faisant saillie dudit panneau mobile.

5. Dispositif selon l'une quelconque des revendications 1 à 4, **caractérisé en ce que** ledit panneau mobile (31) porte au moins une patte de louvoiement (332) destinée à coopérer avec ledit ou lesdits éléments de support et/ou de guidage (32a), (32b) pour permettre le passage de ladite position de libération à une position de coulissement dans laquelle ladite partie mobile peut se déplacer parallèlement audit ensemble fixe.

6. Dispositif selon l'une quelconque des revendications 1 à 5, **caractérisé en ce que** lesdits moyens de support et/ou de guidage (32a), (32b) comprennent au moins un rail et **en ce que** ledit panneau mobile (31) porte au moins un élément susceptible de coulisser dans ledit rail.

7. Dispositif selon les revendications 5 et 6, **caractérisé en ce que** ledit ou lesdits rails présentent au moins une portion (322) formant rampe de louvoiement et assurant le guidage de ladite ou desdites pattes de louvoiement (332).

8. Dispositif d'obturation selon l'une quelconque des revendications 1 à 7, **caractérisé en ce que** ledit panneau mobile (31) porte, au voisinage de son bord opposé à celui portant ladite extension (331), au moins une patte de coulissement (333) susceptible d'être guidée par lesdits moyens de guidage et/ou de support (32a, 32b) pendant le déplacement de coulissement.

9. Dispositif d'obturation selon l'une quelconque des revendications 1 à 8, **caractérisé en ce que** lesdits moyens de guidage et/ou de support présentent une ouverture permettant le passage de ladite patte de coulissement, lors du pivotement dudit panneau mobile.

10. Dispositif d'obturation selon l'une quelconque des revendications 1 à 9, **caractérisé en ce que** lesdits moyens de guidage et/ou de support comprennent un rail unique dans lequel peuvent coulisser ladite patte de louvoiement et ladite patte de coulissement.

11. Dispositif d'obturation selon l'une quelconque des revendications 1 à 10, **caractérisé en ce que** ledit rail se termine par une partie formant un angle non nul avec le plan défini par ledit ensemble fixe, dans laquelle ne circule que ladite patte de louvoiement.

12. Dispositif selon l'une quelconque des revendications 5 à 11, **caractérisé en ce que** la ou lesdites pattes pivotantes sont légèrement décalées vers l'intérieur du véhicule par rapport au plan dudit panneau mobile (31).

13. Dispositif selon les revendications 4, 5, et 8, l'une quelconque des revendications 10 à 12, **caractérisé en ce qu'**il comprend un support unique (33) desdites pattes pivotantes (331), de louvoiement (332) et de coulissement (333), ledit support (33) étant solidaire dudit panneau mobile (31).

14. Dispositif selon la revendication 13, **caractérisé en ce que** ledit support (33) porte des pattes pivotantes (331), de louvoiement (332) et de coulissement (333) au voisinage de chacun des bords parallèles à la direction du coulissement dudit panneau mobile (31).

15. Dispositif d'obturation selon l'une des revendications 13 et 14, **caractérisé en ce que** ledit support (33) présente une forme en C.

16. Dispositif d'obturation selon l'une quelconque des revendications 1 à 15, **caractérisé en ce qu'**il comprend des moyens de verrouillage/déverrouillage dudit panneau mobile dans ladite position d'obturation.

17. Dispositif d'obturation selon la revendication 16, **caractérisé en ce que** lesdits moyens de verrouillage/déverrouillage comprennent au moins un verrou (35) susceptible de coopérer avec ledit support (33).

18. Dispositif d'obturation selon la revendication 17, **caractérisé en ce que** ledit support (33) présente, au voisinage de son bord portant ladite ou lesdites pattes pivotantes (331), au moins un évidement (334) formant logement, en position d'obturation dudit panneau mobile (31), pour ledit verrou (35).

19. Dispositif d'obturation selon l'une quelconque des revendications 17 et 18, **caractérisé en ce que** ledit ou lesdits verrous (35) sont montés coulissant le long d'une tringle (351) solidaire dudit ensemble fixe et sensiblement perpendiculaire audit ou auxdits rails.

20. Dispositif d'obturation selon l'une quelconque des revendications 1 à 19, **caractérisé en ce que** ledit ensemble fixe (30) est un panneau vitré.

21. Porte de véhicule, comprenant un dispositif d'obturation d'une baie d'un véhicule automobile selon l'une quelconque des revendications 1 à 20.

22. Véhicule équipé d'au moins une porte comprenant un dispositif d'obturation d'une baie d'un véhicule automobile selon l'une quelconque des revendications 1 à 20.

## Claims

1. Device for closing an opening in a motor vehicle, said device comprising a fixed unit (30), which is intended to be fastened to the body of the said vehicle, and at least one movable panel (31),
the said movable panel (31) being capable of sliding in relation to the said fixed unit (30) with the aid of supporting and/or guiding means (32a, 32b) mounted on the said fixed unit (30), and of closing or unblocking an aperture (301) arranged in the said fixed unit (30);
the said movable panel (31) comprising means for pivoting in relation to an axis of pivoting extending perpendicularly to the axis of sliding of the said panel and beyond the said supporting and/or guiding means, between a closing position, in which it is located in the plane defined by the said fixed unit (30), and an unblocking position, in which it forms an angle other than zero with the said fixed unit (30); **characterised in that** the said pivoting means comprise at least one extension (331) which is intended to cooperate with at least one bearing line integral with the said fixed unit (30), in such a way that, when the said extension (331) is in contact with the said bearing line:
- a first edge of the said movable panel (31), close to the said extension, is located substantially within the plane defined by the said fixed unit (30); and that
- the said movable panel (31) is capable of pivoting around the said bearing line, so as to pass from the said closing position to the said unblocking position.

2. Closing device according to claim 1, **characterised in that** the said fixed unit (30) has a housing into which the said extension (331) is capable of penetrating.

3. Closing device according to claim 2, **characterised in that** the said housing forms a parallelepipedal cavity (3021), of which one arris (3022) constitutes the said bearing line.

4. Device according to any of claims 1 to 3, **characterised in that** the said extension (331), which is mounted in the vicinity of one edge of the said movable panel (31), comprises at least one tab, referred to as a "pivoting tab", projecting from the said movable panel.

5. Device according to any of claims 1 to 4, **characterised in that** the said movable panel (31) carries at least one tacking tab (332) which is intended to cooperate with the said supporting and/or guiding element or elements (32a), (32b) in order to permit passage from the said unblocking position to a sliding position in which the said movable part is capable of moving parallel to the said fixed unit.

6. Device according to any of claims 1 to 5, **characterised in that** the said supporting and/or guiding means (32a), (32b) comprise at least one rail, and **in that** the said movable panel (31) carries at least one element which is capable of sliding in the said rail.

7. Device according to claims 5 and 6, **characterised in that** the said rail or rails has/have at least one portion (322) which forms a tacking ramp and guides the said tacking tab or tabs (332).

8. Closing device according to any of claims 1 to 7, **characterised in that** the said movable panel (31) carries, in the vicinity of its opposite edge from the edge carrying the said extension (331), at least one sliding tab (333) which is capable of being guided by the said guiding and/or supporting means (32a, 32b) during the sliding movement.

9. Closing device according to any of claims 1 to 8, **characterised in that** the said guiding and/or supporting means have an aperture which enables the said sliding tab to pass through when the pivoting of the said movable panel occurs.

10. Closing device according to any of claims 1 to 9, **characterised in that** the guiding and/or supporting means comprise a single rail in which the said tacking tab and the said sliding tab are capable of sliding.

11. Closing device according to any of claims 1 to 10, **characterised in that** the said rail terminates in a part which forms an angle other than zero with the plane defined by the said fixed unit and in which only the said tacking tab runs.

12. Device according to any of claims 5 to 11, **characterised in that** the said pivoting tab or tabs is/are slightly offset towards the interior of the vehicle in relation to the plane of the said movable panel (31).

13. Device according to claims 4, 5 and 8, **characterised in that** it comprises a single support (33) for the said pivoting tabs (331), tacking tabs (332) and sliding tabs (333), the said support (33) being integral with the said movable panel (31).

14. Device according to claim 13, **characterised in that** the said support (33) carries pivoting tabs (331), tacking tabs (332) and sliding tabs (333) in the vicinity of each of the edges that are parallel to the direction of sliding of the said movable panel (31).

15. Closing device according to either of claims 13 or 14, **characterised in that** the said support (33) is C-shaped.

16. Closing device according to any of claims 1 to 15, **characterised in that** it comprises means for locking/unlocking the said movable panel in the said closing position.

17. Closing device according to claim 16, **characterised in that** the said locking/unlocking means comprise at least one bolt (35) which is capable of cooperating with the said support (33).

18. Closing device according to claim 17, **characterised in that** the said support (33) has, in the vicinity of its edge that carries the said pivoting tab or tabs (331), at least one recess (334) which forms a housing, when the said movable panel (31) is in the closing position, for the said lock (35).

19. Closing device according to either of claims 17 or 18, **characterised in that** the said bolt or bolts (35) is/are mounted so as to slide along a rod (351) which is integral with the said fixed unit and substantially perpendicular to the said rail or rails.

20. Closing device according to any of claims 1 to 19, **characterised in that** the said fixed unit (30) is a glazed panel.

21. Vehicle door comprising a device for closing an opening in a motor vehicle in accordance with any of claims 1 to 20.

22. Vehicle equipped with at least one door comprising a device for closing an opening in a motor vehicle in accordance with any of claims 1 to 20.

## Patentansprüche

1. Schließeinrichtung für eine Scheibe eines Kraftfahrzeuges, die eine feste Einheit (30), welche dazu bestimmt ist, mit der Karosserie des Kraftfahrzeuges verbunden zu werden und mindestens eine bewegliche Platte (31) aufweist, wobei die Platte (31) mittels Stütz- und/oder Führungsmitteln (32a, 32b), die an der festen Einheit (30) befestigt sind, relativ zu der festen Einheit (30) verschiebbar ist und eine Öffnung (301) in der festen Einheit (30) verschließen kann,
wobei die Platte (31) Mittel zum Schwenken um eine Schwenkachse, die senkrecht zur Gleitachse der Platte, angeordnet ist und über die Stütz- und/oder Führungsmittel hinaus zwischen einer Schließstellung, in der sie sich in der Ebene befindet, die durch die feste Einheit (30) definiert ist und einer Freistellung, in der sie einen Winkel mit der festen Einheit (30) einschließt, der nicht Null ist, aufweist,
**dadurch gekennzeichnet, dass** die Mittel zum Schwenken mindestens eine Verlängerung (331) aufweist, die dazu bestimmt ist, mit mindestens einer Stützlinie, die mit der festen Einheit (30) verbunden ist, zusammenzuwirken, so daß, wenn die Verlängerung (331) mit der Stützlinie in Kontakt steht :
• eine erste Kante der beweglichen Platte (31), die nahe der Verlängerung angeordnet ist, sich im Wesentlichen in der Ebene befindet, die durch die feste Einheit (30) definiert ist und
• die bewegliche Platte (31) um die Stützlinie schwenken kan, um von der Schließstellung in die Freistellung zu gelangen.

2. Schließvorrichtung gemäß Anspruch 1, **dadurch gekennzeichnet, dass** die feste Einheit (30) ein Gehäuse aufweist, in die die Verlängerung (331) eintreten kann.

3. Schließvorrichtung gemäß Anspruch 2, **dadurch gekennzeichnet, dass** das Gehäuse einen parallelepipedförmigen Hohlraum (3021) bildet, dessen eine Kante (3022) die Stützlinie bildet.

4. Schließvorrichtung gemäß einem der Ansprüche 1 bis 3, **dadurch gekennzeichnet, dass** die in der Nähe einer Seite der beweglichen Platte (31) angeordnete Verlängerung (331) mindestens einen Vorsprung, genannt Schwenkvorsprung, aufweist, der aus der beweglichen Platte (31) herausragt.

5. Schließvorrichtung gemäß einem der Ansprüche 1 bis 4, **dadurch gekennzeichnet, dass** die bewegliche Platte (31) mindestens einen Manövriervorsprung (332) aufweist, der dazu bestimmt ist, mit dem oder den Stütz- und/oder Führungsmittel(n) (32a, 32b) zusammenzuwirken, um den Übergang von der Freistellung in eine Schwenkstellung zu erlauben, in der die bewegliche Platte sich parallel zu der festen Einheit bewegen kann.

6. Schließvorrichtung gemäß einem der Ansprüche 1 bis 5, **dadurch gekennzeichnet, dass** die Stütz- und/oder Führungsmittel (32a, 32b) mindestens eine Schiene umfassen und dass die bewegliche Platte (31) mindestens ein Element trägt, das in dieser Schiene gleiten kann.

7. Schließvorrichtung gemäß einem der Ansprüche 5 und 6, **dadurch gekennzeichnet, dass** die Schiene bzw. die Schienen mindestens ein Teil aufweisen, das eine Manövrierrampe ausbildet und die Führung des Manövriervorsprungs (332) bzw. der Manövriervorsprünge (332) sicherstellt.

8. Schließvorrichtung gemäß einem der Ansprüche 1 bis 7, **dadurch gekennzeichnet, dass** die bewegliche Platte (31) in der Nähe ihrer Seite, die derjenigen, die die Verlängerung (331) trägt, gegenüber liegt, mindestens einen Gleitvorsprung (333) aufweist, der in den Stütz- und/oder Führungsmitteln (32a, 32b) während der Gleitbewegung führbar ist.

9. Schließvorrichtung gemäß einem der Ansprüche 1 bis 8, **dadurch gekennzeichnet, dass** die Stütz- und/oder Führungsmittel eine Öffnung aufweisen, die den Durchtritt des Gleitvorsprungs beim Schwenken der beweglichen Platte ermöglichen.

10. Schließvorrichtung gemäß einem der Ansprüche 1 bis 9, **dadurch gekennzeichnet, dass** die Stütz- und Führungsmittel eine einzige Schiene aufweisen, in der der Manövriervorsprung und der Gleitvorsprung gleiten können.

11. Schließvorrichtung gemäß einem der Ansprüche 1 bis 10, **dadurch gekennzeichnet, dass** die Schiene mit einem Teil abschließt, das mit der durch die feste Einheit definierten Ebene einen Winkel einschließt, der nicht Null ist und in dem nur der Manövriervorsprung gleitet.

12. Schließvorrichtung gemäß einem der Ansprüche 5 bis 11, **dadurch gekennzeichnet, dass** der Schwenkvorsprung bzw. die Schwenkvorsprünge relativ zu der beweglichen Platte (31) leicht zum Fahrzeuginnern verschoben sind.

13. Schließvorrichtung gemäß den Ansprüchen 4, 5 und 8 sowie einem der Ansprüche 10 bis 13, **dadurch gekennzeichnet, dass** sie eine einzige Stützvorrichtung (33) für die Schwenkvorsprünge (331), die Manövriervorsprünge (332) und die Gleitvorsprünge (333) umfaßt, wobei die Stützvorrichtung (33) mit der beweglichen Platte (31) verbunden ist.

14. Schließvorrichtung gemäß Anspruch 13, **dadurch gekennzeichnet, dass** die Stützvorrichtung (33) Schwenkvorsprünge (331), Manövriervorsprünge (332) und Gleitvorsprünge (333) in der Nähe jeder der Seiten, die parallel zu der Gleitrichtung der beweglichen Platte (31) angeordnet sind, trägt.

15. Schließvorrichtung gemäß den Ansprüchen 13 und 14, **dadurch gekennzeichnet, dass** die Stützvorrichtung (33) C-förmig ausgebildet ist.

16. Schließvorrichtung gemäß einem der Ansprüche 1 bis 15, **dadurch gekennzeichnet, dass** sie Mittel zum Verriegeln bzw. Entriegeln der beweglichen Platte in der Schließstellung aufweist.

17. Schließvorrichtung gemäß Anspruch 16, **dadurch gekennzeichnet, dass** die Mittel zum Verriegeln bzw. Entriegeln mindestens einen Riegel (35) umfassen, der mit der Stützvorrichtung (33) zusammenwirken kann.

18. Schließvorrichtung gemäß Anspruch 17, **dadurch gekennzeichnet, dass** die Stützvorrichtung (33) in der Nähe ihrer Seite, die die Schwenkvorsprünge (331) trägt, mindestens eine Ausnehmung (334) aufweist, die in der Schließstellung der beweglichen Platte (31) ein Gehäuse für den Riegel (35) bildet.

19. Schließvorrichtung gemäß einem der Ansprüche 17 und 18, **dadurch gekennzeichnet, dass** der bzw. die Riegel (35) entlang einer Stange (351) gleitend montiert sind, welche mit der festen Einheit verbunden und im Wesentlichen senkrecht zu der Schiene bzw. den Schienen angeordnet ist.

20. Schließvorrichtung gemäß einem der Ansprüche 1 bis 19, **dadurch gekennzeichnet, dass** die feste Einheit (30) ein Glasdach ist.

21. Tür eines Kraftfahrzeugs, umfassend eine Schließvorrichtung für eine Fahrzeugöffnung gemäß einem der Ansprüche 1 bis 20.

22. Kraftfahrzeug, das mit mindestens einer Tür versehen ist, die eine Schließvorrichtung für eine Fahrzeugöffnung gemäß einem der Ansprüche 1 bis 20 aufweist.
